# FASCICULE DE BREVET EUROPEEN

(11) **EP 2 649 553 B1**
(45) Date de publication et mention de la délivrance du brevet: **08.05.2019**
(21) Numéro de dépôt: 11794698.8
(22) Date de dépôt: 07.12.2011
(51) Int. Cl.: G06K 7/00, G06F 21/35, G06F 13/20, G06F 21/43, H04L 9/32, H04L 29/06, G06F 3/06, G06F 13/40

(54) **DISPOSITIF D'APPAIRAGE DYNAMIQUE**
DYNAMISCHE PAARUNGSVORRICHTUNG
DYNAMIC PAIRING DEVICE

(30) Priorité: 10.12.2010 FR 1004830
(43) Date de publication de la demande: 16.10.2013
(73) Titulaire: Ingenico Group, 75015 Paris (FR)
(72) Inventeur: DEBORGIES, Luc, F-92320 Châtillon (FR)
(74) Mandataire: Vidon Brevets & Stratégie
(86) Numéro de dépôt international: PCT/EP2011/072005
(87) Numéro de publication internationale: WO 2012/076571

(56) Documents cités:
- EP-A2- 0 843 425
- EP-B1- 1 695 296
- FR-A1- 2 824 943
- US-A1- 2007 251 997
- US-B1- 6 189 105

## Description

La présente invention concerne l'appairage dynamique entre deux périphériques, et notamment un système d'appairage dynamique.

L'invention s'applique par exemple aux processus d'authentification par carte à mémoire, par exemple une carte à puce comportant, outre des moyens de mémoire, un microcontrôleur ou microprocesseur et éventuellement un module cryptographique, et notamment, mais non exclusivement, aux ouvertures de session sur un poste de travail.

Les cartes à mémoire sont aujourd'hui très largement utilisées pour leur haut niveau de sécurité. Elles sont notamment utilisées dans le cadre de la sécurisation de l'accès à des postes de travail. Dans cette application, le poste de travail est équipé d'un lecteur de carte à mémoire connecté à l'ordinateur. Lorsqu'un utilisateur souhaite utiliser ce poste de travail, il insère sa carte dans le lecteur dédié. Suivant les applications, le logiciel lui demande de saisir son code PIN pour valider l'ouverture de la session.

Les cartes à mémoires peuvent intégrer également un canal de communication sans contact. Ce type de carte équipée d'une antenne est apte à dialoguer à distance avec un récepteur dédié.

Dans le cadre d'une application d'ouverture de session sur un ordinateur, l'utilisation d'une carte sans contact est extrêmement intéressante car l'utilisateur n'a plus à insérer sa carte dans un lecteur dédié et connecté audit ordinateur, la carte transmettant à distance, par exemple, les codes d'ouverture de la session.

Toutefois, cette méthode a le désavantage de ne pas être discriminant lorsque la carte se trouve à portée de plusieurs ordinateurs. La carte ne sait pas à quel ordinateur elle doit se connecter, autrement dit sur quel ordinateur, le porteur de la carte, a-t-il choisi de travailler ?

Le document de brevet EP 1695296 concerne l'identification d'individus lors de transactions électroniques mettant en oeuvre des moyens mobiles et un terminal (fixe), cette identification étant réalisée en utilisant un dispositif portable porté par l'individu et un terminal, ces deux dispositifs pouvant communiquer entre eux grâce à des émetteurs-récepteurs, de manière sans fil. En revanche, ce document ne prévoit pas que le premier dispositif soit capable de lire des données d'une carte à mémoire.

La présente invention pallie ces inconvénients.

Selon un mode de réalisation l'invention vise un système d'appairage dynamique entre deux périphériques, dont le premier dialogue avec une carte à mémoire et le second est connecté à un ordinateur.

Dans un mode privilégié de l'invention, la carte à mémoire est portée autour du cou dans un premier dispositif, par exemple un porte-badge, ou dans une poche. Un second dispositif, appelé « base » dans la suite de la description, est directement connecté à l'ordinateur. Dans un environnement multi ordinateur, il y a aura donc une multitude de bases.

Comme préalablement évoqué, afin de discriminer le poste de travail visé par l'utilisateur, il est nécessaire d'envisager un acte volontaire de la part du porteur. La carte étant située très proche du corps (autour du cou ou dans une poche), il est possible d'utiliser le corps humain comme antenne et initialiser ainsi un canal de communication entre le porte-badge et la base. Cette initialisation peut, par exemple, consister à échanger une clé de cryptage puis à démarrer une communication radiofréquence chiffrée avec cette clé. Cette communication étant établie, les identifiants nécessaires contenus dans la carte à mémoire pour ouvrir automatiquement une session sur le poste de travail pourront aisément être transmis.

Deux technologies de communication, connues de l'homme de l'art, peuvent être avantageusement utilisées au sein de cette invention : le couplage capacitif et la radiofréquence.

Selon un aspect général de l'invention il est donc proposé un système d'appairage dynamique entre un premier périphérique pouvant dialoguer avec une carte à mémoire, telle qu'une carte à puce, et un second périphérique connecté à un ordinateur.

Selon une caractéristique générale de cet aspect ledit premier périphérique comprend des moyens aptes à lire les données contenues dans ladite carte à mémoire, des moyens aptes à réceptionner via un premier canal de communication une première information émise par ledit second périphérique et des moyens aptes à émettre via un second canal de communication une seconde information, et ledit second périphérique comprend des moyens aptes à émettre via ledit premier canal de communication ladite première information et des moyens aptes à recevoir via ledit second canal de communication ladite seconde information, la valeur de cette seconde information conditionnant l'autorisation d'ouverture d'un canal de communication bidirectionnel entre ledit premier et ledit second périphérique, ce canal bidirectionnel étant avantageusement le second canal de communication.

Ledit premier canal de communication est avantageusement réalisé sous la forme d'un couplage capacitif via un corps humain entre ledit second périphérique et ledit premier périphérique.

Selon un mode de réalisation les moyens du premier périphérique aptes à réceptionner via le premier canal de communication ladite première information comprennent un premier module apte à recevoir ladite première information par couplage capacitif avec un corps humain et les moyens du second périphérique aptes à émettre via ledit premier canal de communication ladite première information comprennent un premier module apte à émettre ladite première information par couplage capacitif via ledit corps humain.

Selon un mode de réalisation le premier module du deuxième périphérique comprend des moyens de détection de la proximité du corps humain, un émetteur et une antenne apte à transmettre ladite première information sur la fréquence du premier canal de communication, et le premier module du deuxième périphérique comprend une antenne et un récepteur.

Les moyens de détection comportent par exemple une zone tactile capacitive.

La fréquence dudit premier canal de communication est avantageusement de 125 KHz.

Le second canal de communication est avantageusement un canal radiofréquence, dont la fréquence est par exemple dans une bande ISM.

Selon un mode de réalisation les moyens du premier périphérique aptes à émettre via le second canal de communication ladite seconde information comprennent un second module radiofréquence émetteur/récepteur, et les moyens du second périphérique aptes à recevoir via ledit second canal de communication ladite seconde information comprennent un second module radiofréquence émetteur/récepteur.

Ladite première information est par exemple une valeur représentative de l'adresse réseau dudit second périphérique et d'une donnée pseudo-aléatoire générée au sein dudit second périphérique.

Avantageusement le second périphérique comprend des moyens configurés pour générer ladite donnée pseudo-aléatoire et pour générer une nouvelle donnée pseudo-aléatoire à chaque nouvelle détection du corps humain, par exemple à chaque détection d'une main.

Ladite seconde information peut être par exemple une donnée représentative de l'adresse réseau dudit premier périphérique et de ladite première information.

En variante, ladite seconde information peut comprendre ladite donnée pseudo-aléatoire, avec éventuellement une indication de puissance de signal reçu (paramètre RSSI).

Quoi qu'il en soit, quelle que soit la variante, c'est avantageusement la donnée pseudo-aléatoire qui va conditionner l'ouverture ou non du canal bidirectionnel.

Ainsi, selon un mode préféré de réalisation ledit second périphérique comprend des moyens configurés pour vérifier que la donnée pseudo-aléatoire reçue via ladite deuxième information est identique à la donnée pseudo-aléatoire transmise via ladite première information et pour autoriser l'ouverture du canal bidirectionnel si cette vérification est positive et pour refuser cette ouverture dans le cas contraire.

Ledit canal de communication bidirectionnel est par exemple un réseau sans fil point à point entre les deux périphériques et/ou peut être un canal crypté.

Dans une application d'ouverture de session, la carte à mémoire contient des informations d'ouverture de session sur ledit ordinateur, et selon un mode de réalisation, le premier périphérique comprend des moyens aptes à transmettre lesdites informations d'ouverture de session sur le canal de communication bidirectionnel et le second périphérique comprend des moyens aptes à recevoir lesdites informations d'ouverture de session et à les transmettre audit ordinateur.

Selon un mode de réalisation le deuxième périphérique comprend des premiers moyens de contrôle aptes à détecter un éloignement du premier périphérique par rapport au deuxième périphérique et à initier une fermeture de session sur l'ordinateur.

Selon un mode de réalisation le deuxième périphérique comprend des deuxièmes moyens de contrôle aptes à détecter une perte de connexion sur le canal de communication bidirectionnel et à initier une fermeture de session sur l'ordinateur.

Selon un mode de réalisation le second périphérique comprend des troisièmes moyens de contrôle aptes à initier une interruption de connexion avec un premier périphérique déjà appairé en cas d'une nouvelle détection de corps humain par les moyens de détection.

Le premier périphérique peut être un boîtier, par exemple du type porte-badge, apte à recevoir ladite carte à mémoire.

Selon un autre aspect de l'invention il est proposé un boîtier, par exemple du type porte badge, formant le premier périphérique du système tel que défini ci-avant et comportant un logement pour recevoir la carte à mémoire.

Selon un autre aspect il est proposé une base, formant le second périphérique du système et comportant avantageusement une zone tactile capacitive.

Selon un autre aspect de l'invention, il est proposé un procédé d'appairage dynamique entre un premier périphérique dialoguant avec une carte à mémoire et un second périphérique connecté à un ordinateur.

Selon une caractéristique générale de cet autre aspect ledit premier périphérique réceptionne via un premier canal de communication une première information émise par ledit second périphérique et émet via un second canal de communication une seconde information que reçoit ledit second périphérique, la valeur de cette seconde information conditionnant l'autorisation d'ouverture d'un canal de communication bidirectionnel entre ledit premier et ledit second périphérique.

Selon un mode de mise en oeuvre le second périphérique génère une donnée pseudo-aléatoire lors de la détection d'une proximité du corps humain, par exemple une main, et de préférence génère une nouvelle donnée pseudo-aléatoire à chaque nouvelle détection du corps humain, et ladite première information est une valeur représentative de l'adresse réseau dudit second périphérique et de la donnée pseudo-aléatoire.

Ladite seconde information contient avantageusement au moins ladite donnée pseudo-aléatoire et est par exemple une donnée représentative de l'adresse réseau dudit premier périphérique et de ladite première information.

Selon un mode préféré de mise en oeuvre ledit second périphérique vérifie que la donnée pseudo-aléatoire reçue via ladite deuxième information est identique à la donnée pseudo-aléatoire transmise via ladite première information et autorise l'ouverture du canal bidirectionnel si cette vérification est positive et refuse cette ouverture dans le cas contraire.

Selon un mode de mise en oeuvre, applicable lors d'une ouverture de session informatique, la carte à mémoire contient des informations d'ouverture de session sur ledit ordinateur, et le premier périphérique transmet lesdites informations d'ouverture de session sur le canal de communication bidirectionnel et le second périphérique les transmet audit ordinateur.

Le deuxième périphérique détecte avantageusement un éloignement du premier périphérique par rapport au deuxième périphérique et initie une fermeture de session sur l'ordinateur.

Le deuxième périphérique peut également détecter une perte de connexion sur le canal de communication bidirectionnel et initier alors une fermeture de session sur l'ordinateur.

Le second périphérique peut également initier une interruption de connexion avec un premier périphérique déjà appairé en cas d'une nouvelle détection de proximité de corps humain.

D'autres avantages et caractéristiques de l'invention apparaîtront à l'examen de la description détaillée de modes de mise en oeuvre et de réalisation, nullement limitatifs, et des dessins annexés sur lesquels :
- la figure 1 illustre schématiquement une vue en perspective d'un exemple de réalisation d'un porte-badge selon l'invention,
- la figure 2 représente schématiquement la vue de devant du porte-badge de la figure 1,
- la figure 3 illustre schématiquement un exemple d'architecture matérielle d'un premier périphérique ou porte-badge selon l'invention,
- la figure 4 illustre schématiquement une vue en perspective d'un exemple de réalisation d'un deuxième périphérique ou base selon l'invention,
- la figure 5 illustre schématiquement un exemple d'architecture matérielle d'un second périphérique selon l'invention,
- la figure 6 illustre schématiquement un synoptique de fonctionnement d'un système d'appairage selon l'invention, et,
- les figures 7 à 12 illustrent plus en détail différents modes de mise en oeuvre d'un procédé selon l'invention correspondant à différents modes de fonctionnement d'un système selon l'invention.

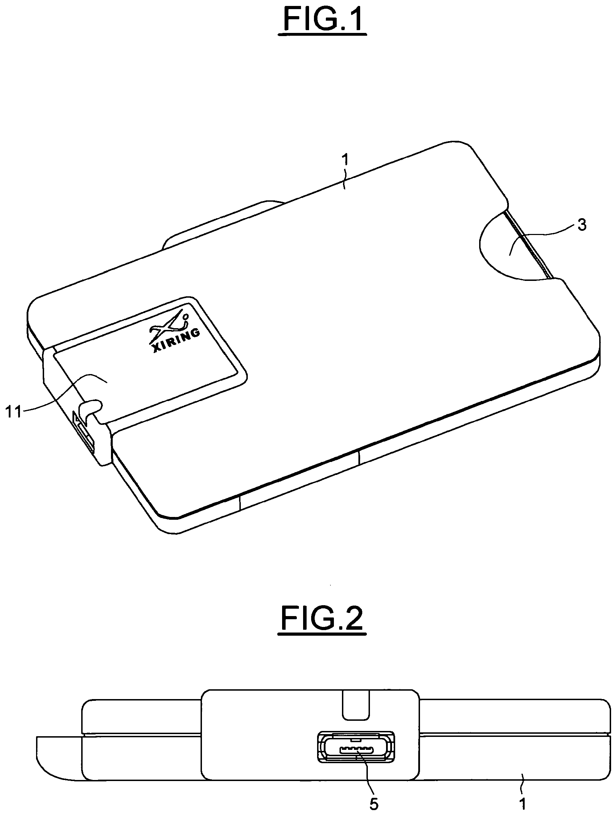

Selon les figures 1 ou 2 le premier périphérique 1 se présente sous la forme d'un boîtier pouvant recevoir physiquement la carte à mémoire 3, et pouvant dialoguer avec elle en mode « sans contact » ou « contact ». Une telle carte à mémoire est également couramment appelée « carte à puce » ou « carte à microcircuit ». Ce premier périphérique, de la forme d'un porte-badge, intègre également un connecteur 5 de type USB permettant, au moins, le rechargement énergétique de la batterie contenue dans le périphérique. Ce connecteur peut également permettre de connecter directement ce périphérique sur l'ordinateur devenant ainsi un lecteur PC/SC. Ce périphérique intègre également un bloc 11 contenant un premier module apte à recevoir des informations via une technologie de couplage capacitif et un second module apte à émettre et à recevoir des informations via une technologie de radiofréquence. Enfin, une source d'énergie rechargeable et apte à obtenir une autonomie suffisante dans le cas d'usage retenu est également intégrée dans ce premier périphérique 1.

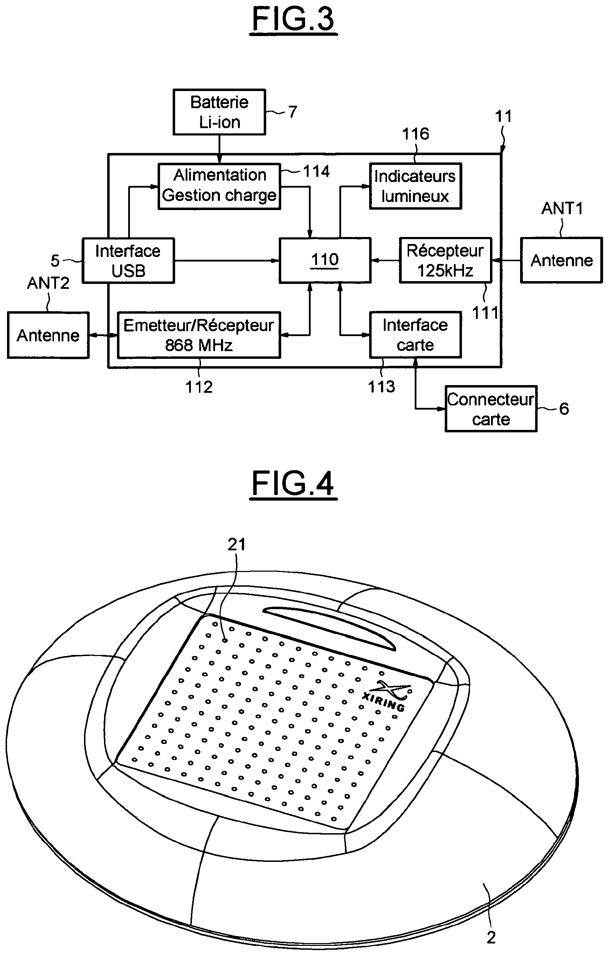

Si l'on se réfère maintenant plus particulièrement à la figure 3, on voit que l'architecture matérielle du bloc 11 du porte-badge 1 est articulée autour de moyens de traitement 110, par exemple un microcontrôleur ou un microprocesseur.

Le bloc 11 comporte des moyens, tels qu'un connecteur carte 6 et une interface 113, aptes à lire les données contenues dans ladite carte mémoire lorsque cette dernière est insérée dans le connecteur 6.

Le bloc 11 comporte également des moyens aptes à réceptionner, via un premier canal de communication dont on reviendra plus en détail ci-après sur la structure, une première information émise par le second périphérique. Il comporte le premier module « couplage capacitif » mentionné ci avant et inclut ici une antenne ANT1, un récepteur 111 125 kHz, de structure classique et connue en soi, connecté au microcontrôleur 110.

Le bloc 11 comporte également des moyens, incluant le second module radiofréquence mentionné ci avant, aptes à émettre, via un second canal de communication dont on verra plus en détail ci après qu'il est avantageusement un canal radiofréquence, une seconde information. Ces moyens comprennent une autre antenne ANT2, un émetteur/récepteur 112, par exemple un émetteur/récepteur 868 MHz, de structure classique et connue en soi, connecté au microprocesseur 110.

Outre ces moyens, on retrouve sur la figure 3 l'interface USB formant le connecteur 5, des moyens de gestion d'alimentation 114 reliés à la batterie 7, ainsi que des indicateurs lumineux, par exemple des diodes électroluminescentes 116, destinées à la visualisation par l'utilisateur des différents états de fonctionnement du porte-badge, et en particulier l'établissement des différentes liaisons avec le second périphérique.

Selon la figure 4, le second périphérique 2 possède tout d'abord des moyens pour se connecter, avantageusement en mode USB, sur l'ordinateur hôte. L'énergie dont il a besoin sera obtenue via cette connexion.

Ce second périphérique 2 intègre un bloc 21 contenant un premier module apte à émettre des informations via une technologie de couplage capacitif et un second module apte à émettre et à recevoir des informations via une technologie de radiofréquence.

L'architecture matérielle du bloc 21 de la base 2 s'articule également autour de moyens de traitement 510, tels qu'un microprocesseur.

Le bloc comprend des moyens, incluant le premier module « couplage capacitif » mentionné ci avant, aptes à émettre, via le premier canal de communication, la dite première information. Ces moyens incorporent notamment un émetteur 125 kHz, de structure classique et connue en soi, couplé à une antenne ANT3 et relié également au microprocesseur 510.

Le bloc 21 comporte également des moyens, incorporant le second module radiofréquence évoqué ci avant, aptes à recevoir via le second canal de communication, ladite seconde information. Ces moyens comportent ici un émetteur/récepteur radiofréquence 512, en particulier un émetteur/récepteur 868 MHz, connecté à une antenne ANT4 ainsi qu'au microprocesseur 510.

Les moyens aptes à émettre, via le premier canal de communication, la première information, comportent également ici une zone tactile capacitive 520 connectée au microprocesseur 510.

Dans un cas particulier de réalisation, la zone tactile capacitive 520 est en forme de peigne et l'antenne ANT3 est également en forme de peigne, les dents des deux peignes étant imbriquées.

On retrouve également l'interface USB 505, reliée à des moyens de gestion d'alimentation 514 qui permettent d'alimenter la base via l'ordinateur.

Là encore, les indicateurs lumineux 516, par exemple des diodes électroluminescentes, permettent à l'utilisateur de visualiser l'état de la base et en particulier l'établissement des différentes connexions avec le porte-badge.

Il est également possible que la base puisse être utilisée directement avec la carte à mémoire sans passer par un porte-badge. Dans ce cas, il est prévu un connecteur carte 515 relié au microprocesseur 510 par une interface 513.

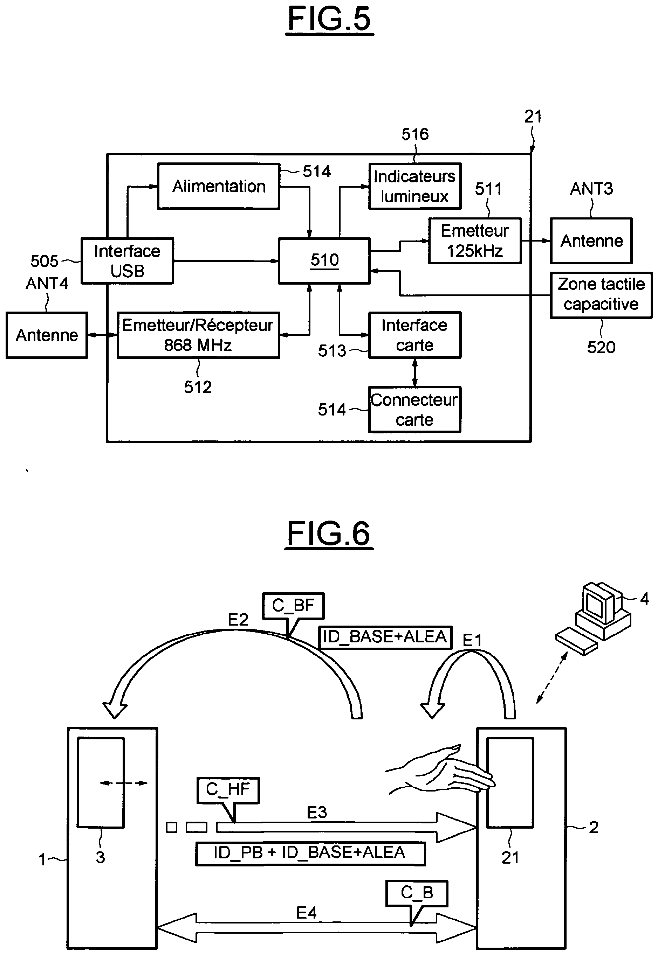

Selon le synoptique présenté sur la figure 6, l'établissement d'un canal de communication bidirectionnel C B entre les deux périphériques est le suivant :
- Via son module « couplage capacitif », la base 2 attend la détection d'une main humaine proche.
- Via son module « couplage capacitif » le porte-badge 1 est en attente d'une initialisation de communication.
- E1 -> Dès qu'une main humaine est détectée, la base 2 émet, via son module « couplage capacitif », une valeur représentative de son adresse « réseau » ID_BASE et d'une valeur pseudo-aléatoire générée par la base 2 et modifiée à chaque détection d'une main. Cette valeur pseudo-aléatoire est référencée ALEA.
- E2 -> Ces deux informations sont transmises à travers le corps humain (premier canal C_BF) et sont reçues par le module « couplage capacitif » du porte-badge 1 si celui-ci est situé proche dudit corps humain.
- E3 -> Suite à cette réception, le porte-badge 1 émet, via son module radiofréquence (sur le deuxième canal C_HF), une donnée représentative de son adresse « réseau » ID PB, de l'adresse « réseau » IDBASE reçue de la base 2 et de l'ALEA. La base réceptionne cette dernière information à l'aide de son module radiofréquence et vérifie que l'ALEA reçu est bien celui qui a été envoyé et autorise alors la connexion point à point.
   E4 -> Base 2 et porte-badge 1 ont ainsi initialisé une communication radiofréquence bidirectionnelle C_B point à point entre les deux périphériques.

L'homme de l'art comprendra aisément que le canal de communication bidirectionnel C B ainsi établi utilise la même fréquence que le canal préalablement utilisé par le porte-badge pour la transmission de son adresse « réseau » (Etape E3).

Ce canal de communication bidirectionnel étant initialisé, les informations liées, par exemple à l'ouverture de session sur l'ordinateur 4 peuvent être donc transmises de la carte via le porte-badge vers l'ordinateur via la base.

Lorsque l'utilisateur souhaite fermer sa session sur le poste de travail, il suffira qu'il s'éloigne, par exemple de quelques pas, pendant une durée de temps suffisante et la liaison radiofréquence sera automatiquement coupée. Dès lors, le logiciel de la base initiera une fermeture de session sur l'ordinateur.

Le principe de l'invention permet donc d'appairer dynamiquement, par exemple, un porte-badge et une base à l'aide d'un acte humain volontaire.

Selon un mode privilégié de l'invention, la technologie de couplage capacitif, pour le premier canal de communication, est utilisée à une fréquence de 125 KHz. Cette technologie, connue de l'homme se l'art, utilise les capacités du corps humain pour la bonne transmission de cette gamme de fréquences.

Selon un autre mode de réalisation de l'invention, la bande de radiofréquence pour le second canal de communication est une bande ISM (Les bandes ISM - Industriel, Scientifique, et Médical - sont des bandes de fréquence qui ne sont pas soumises à des réglementations nationales et qui peuvent être utilisées librement (gratuitement, et sans autorisation) pour des applications industrielles, scientifiques et médicales. Les seules obligations à observer sont : la puissance d'émission et les excursions en fréquence, ou la perturbation de fréquences voisines. Les champs d'application typiques sont les réseaux sans fil. Dans le cadre de l'invention, la fréquence 868 MHz a été choisie et peut être différente sans nullement modifier la portée de l'invention.

Aussi on peut utiliser une fréquence choisie par exemple dans les bandes ISM 863-870, 902-928 MHz ou 950-960 MHz.

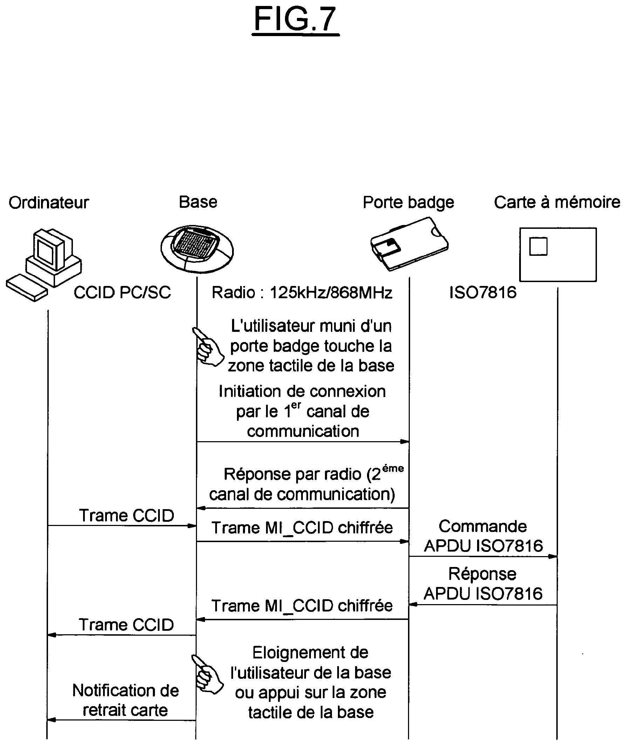

On se réfère maintenant plus particulièrement aux figures 7 à 12, pour illustrer plus en détail des modes de fonctionnement du système utilisant ici une carte à puce comme carte à mémoire.

Comme indiqué ci avant, le système selon l'invention, et en particulier la base, permet de simplifier le port d'une carte à puce utilisée comme badge et comme carte d'authentification sur un ordinateur. En effet, pour activer la communication entre la base et le porte-badge, l'utilisateur touche la zone tactile de la base. Celle-ci établit un canal sécurisé vers le porte-badge afin de communiquer avec lui. Ainsi, l'utilisateur n'a pas à ôter la carte à puce de son porte-badge pour l'insérer par exemple dans un lecteur PC/SC.

Comme illustré sur les figures 7 et suivantes, le porte-badge et la base communiquent via deux liaisons sur deux canaux de communication :
- une liaison radiofréquence bidirectionnelle de porteuse 868 MHz, utilisant une modulation de fréquence,
- une liaison radio unidirectionnelle de porteuse 125 kHz utilisant une modulation d'amplitude allant de la base vers le porte-badge, utilisant le corps de l'utilisateur pour canaliser le signal de la base vers le porte-badge.

Comme indiqué ci avant, l'utilisateur porte le porte-badge au moyen d'une pince ou d'une sangle de cou. Ainsi, le porte-badge est à proximité du corps de l'utilisateur (quelques centimètres). De préférence, l'appairage n'est pas a priori possible si le porte-badge n'est pas proche du corps de l'utilisateur.

Comme illustré sur la figure 7, lorsque l'utilisateur touche la zone tactile de la base, la base envoie son identifiant (adresse) au porte-badge via la liaison capacitive établie par le premier canal de communication, et le porte-badge répond via la liaison radio sur le deuxième canal de communication.

Une fois l'appairage effectué, la liaison entre la base et le porte-badge s'effectue sur le canal de communication bidirectionnelle, qui est ici le deuxième canal de communication, par exemple par l'intermédiaire de trames CCID (« Circuit Cards Interface Devices ») de structures conformes à celles décrites dans le document intitulé « Specification for Integrated Circuit(s) Cards Interface Devices », par exemple la version 1.1 du 22 avril 2005.

Cela étant il est avantageux d'utiliser sur le canal de communication bidirectionnelle et pour le dialogue entre la base et le porte-badge, des trames spécifiques référencées Mi_CCD. Ces trames Mi_CCD, issues de la spécification CCID mentionnée ci-avant, présentent un en-tête réduit par rapport aux dix octets habituellement utilisés dans l'en-tête des trames CCID. Ceci permet d'optimiser le débit de données transmises. Et afin de respecter les standards de transfert d'informations, l'utilisation éventuelle de ces trames Mi_CCID est réservée à la seule transmission radiofréquence sur le canal de communication bidirectionnelle entre la base et le porte badge.

Les trames CCID et Mi_CCID peuvent être éventuellement chiffrées.

La communication entre l'ordinateur et la base via la liaison USB s'effectue à l'aide de trames CCID.

Par ailleurs, dans l'exemple décrit ici, la liaison entre le porte-badge et la carte à mémoire s'effectue par l'intermédiaire de commandes et de réponses APDU (« Application Protocole Data Unit ») conformes à la norme ISO 7816.

Il convient également de noter que lorsque l'appairage est terminé entre la base et un porte-badge, le premier canal de communication est de toute façon inopérant car en pratique l'utilisateur ne touche plus la zone tactile de la base, et son corps ne peut donc plus jouer le rôle de canal entre la base et le porte-badge.

Par ailleurs, sur le deuxième canal de communication, la communication entre la base et le porte-badge, le protocole utilisé peut être par exemple le protocole MiWi particulièrement prévu pour des transmissions de données à bas débit et sur de courtes distances.

Cela étant, même avec ce protocole, les trames échangées que ce soit des trames CCID ou Mi_CCID respectent la structure des commandes décrite dans la spécification CCID mentionnée ci avant.

Comme on le verra plus en détail ci après, lors d'un éloignement de l'utilisateur de la base ou appui sur la zone tactile de la base, il y a interruption de la connexion, ce qui se traduit par exemple par l'envoi à l'ordinateur d'une notification équivalente à un retrait carte conduisant à l'interruption de la session ouverte sur le poste de travail.

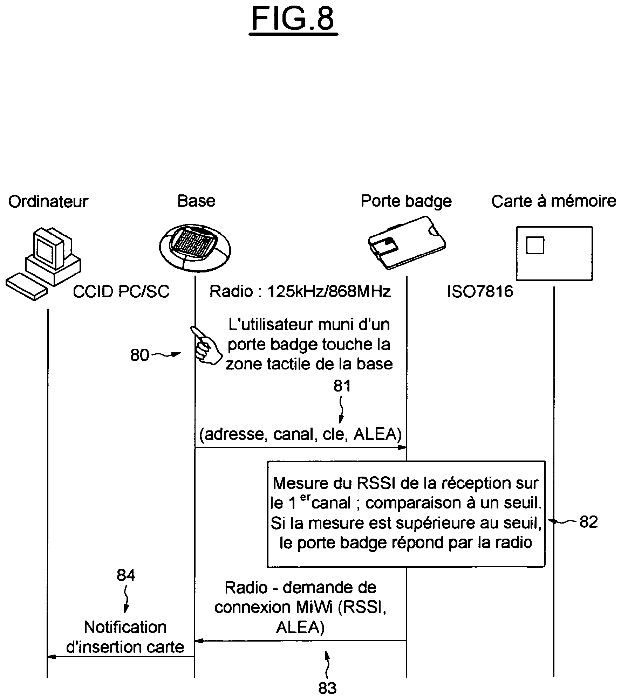

On se réfère maintenant plus particulièrement à la figure 8 pour décrire plus en détail un exemple d'appairage entre la base et un porte-badge.

Plus particulièrement, lorsque l'utilisateur touche la zone tactile de la base (étape 80), les moyens 510, 511, et ANT3 de la base transmettent une première information comportant ici l'adresse de la base, le n° de canal radio utilisé, éventuellement une clé de cryptage (par exemple sur 64 ou 128 bits) de préférence elle-même cryptée par exemple selon la méthode de Diffie Hellman bien connue de l'homme du métier, ainsi que la donnée aléatoire ALEA générée dans la base (étape 81).

Les moyens de traitement du porte-badge mesurent ici le paramètre RSSI (« Received Signal Strength Indication ») fournissant une mesure de la puissance reçue du signal, afin de s'assurer sur le porte-badge est bien porté par l'utilisateur. En effet, le paramètre RSSI mesuré par un porte-badge porté sur le corps d'un utilisateur est largement supérieur au paramètre RSSI d'un porte-badge n'étant pas proche du corps de l'utilisateur.

Le porte-badge se connecte avantageusement à la base si le paramètre RSSI de réception est au dessus d'un certain seuil.

Dans la variante décrite ici, la base accepte les connexions de tous les porte-badges pendant un temps défini. Elle déconnecte ensuite tous les porte-badges excepté celui qui a le paramètre RSSI le plus important.

Par ailleurs, la demande de connexion (étape 83, figure 8) envoyée par un porte-badge comporte, dans cette variante, outre le paramètre RSSI mesuré en réception, la donnée pseudo-aléatoire ALEA qui a été reçue par le porte-badge via le premier canal de communication.

Les moyens de traitement de la base vérifient alors que la donnée pseudo aléatoire ALEA reçue correspond bien à la donnée pseudo-aléatoire ALEA transmise à l'étape 81 sur le premier canal de communication.

Dans le cas où cette vérification est positive, il y a transmission à l'ordinateur d'une commande de notification d'insertion de carte (étape 84) permettant l'ouverture du canal bidirectionnel de communication entre la base et le porte-badge, ce qui va permettre la transmission des identifiants d'ouverture d'une session sur le poste de travail depuis la carte à mémoire vers l'ordinateur via le porte-badge, la liaison radio, la base et le câble USB.

La base vérifie avantageusement la présence du porte-badge dans son champ à intervalles réguliers, par exemple toutes les 500 millisecondes, à partir de la dernière communication radio. Ceci permet au porte-badge et à la base de mesurer des paramètres RSSI et d'en évaluer la distance séparant la base du porte-badge.

Par ailleurs, il est prévu qu'un utilisateur, même non pourvu d'un porte-badge, doive pouvoir reprendre à tout instant le contrôle d'un poste de travail (ordinateur) utilisant un porte-badge déjà appairé.

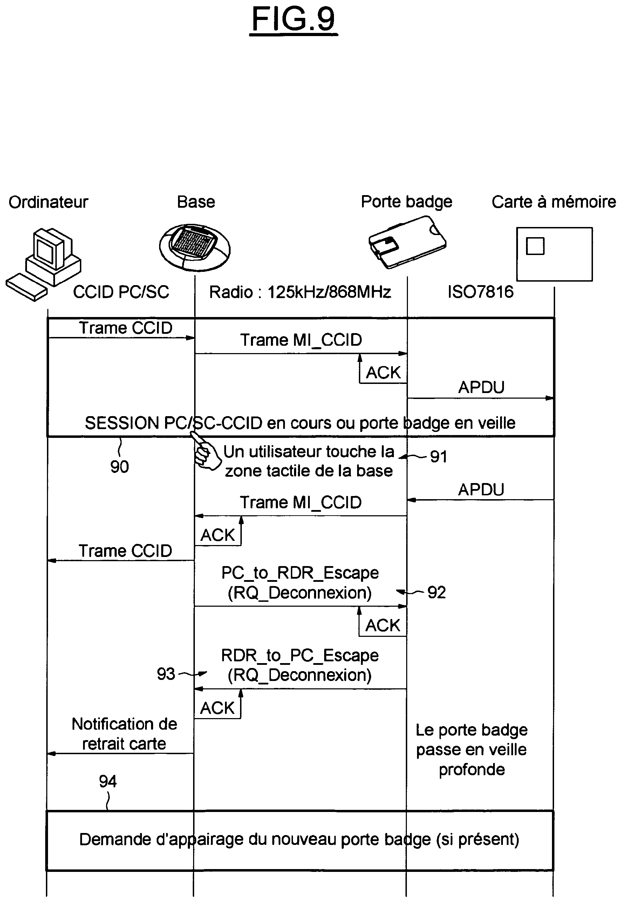

Ainsi, comme illustré sur la figure 9, dès qu'un utilisateur, même non muni d'un porte-badge, touche (étape 91) la zone tactile d'une base, si cette base est déjà appairée à un porte-badge (étape 90), la base va attendre de pouvoir parler au porte-badge et demander la déconnexion avec le porte-badge déjà appairé.

Plus précisément, lorsque l'utilisateur touche la zone tactile de la base, il y a transmission d'une commande de déconnexion depuis la base vers le porte-badge (étape 92) et renvoi d'une commande de déconnexion depuis le porte-badge vers la base (étape 93).

Le porte-badge passe alors dans un mode de veille profonde, tandis que la commande de notification de retrait de carte est transmise à l'ordinateur par des moyens de contrôle de la base réalisés par exemple de façon logicielle au sein du microprocesseur, ce qui interrompt la session ouverte sur le poste de travail.

Un nouveau processus d'appairage du nouveau porte-badge si il est présent, s'opère alors (étape 94).

Lorsqu'un utilisateur muni d'un porte badge s'éloigne de la base avec laquelle il est appairé, le couple porte-badge/base doit détecter cet éloignement et décider de déconnecter le porte-badge de la base si le porte-badge est considéré comme trop éloigné de sa base.

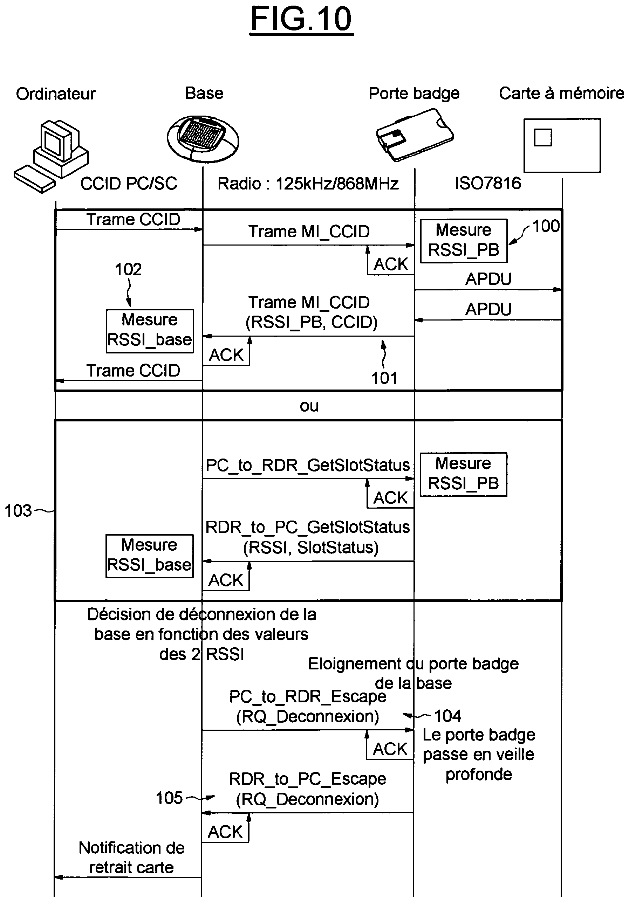

Ceci est illustré schématiquement sur la figure 10.

L'évaluation de la distance est réalisée par une mesure du paramètre RSSI à la fois dans le porte-badge et dans la base. Plus précisément, lors de chaque réception de trame dans le porte-badge, le paramètre RSSI du signal de réception est mesuré (étape 100). Le porte-badge retourne à la base dans la trame de réponse la valeur RSSI_PB du paramètre RSSI en réception (étape 101). La base mesure aussi son paramètre RSSI en réception lors de la réception de la trame (étape 102).

Si aucun échange CCID n'est en cours, la base envoie périodiquement une trame Mi_CCID spécifique qui permet de mesurer les paramètres RSSI (étape 103).

En fonction de la distance calculée à partir des deux valeurs mesurées des paramètres RSSI, des moyens de contrôle de la base (par exemple réalisés de façon logicielle au sein du microprocesseur 510) peuvent alors décider d'initier une demande de déconnexion du porte-badge si cette distance dépasse un seuil prédéfini (étapes 104 et 105), d'une façon analogue à ce qui a été décrit en référence à la figure 9 (étapes 90 et 91).

Lorsqu'une base ne reçoit pas de réponse à une trame CCID dans un délai prédéfini, par exemple un délai de 10 secondes, les moyens de contrôle de la base prennent l'initiative de répondre à la commande CCID reçue de l'ordinateur en signifiant une erreur (« card removed ») et vont notifier au poste de travail l'arrachement d'une carte (commande de notification de retrait de carte).

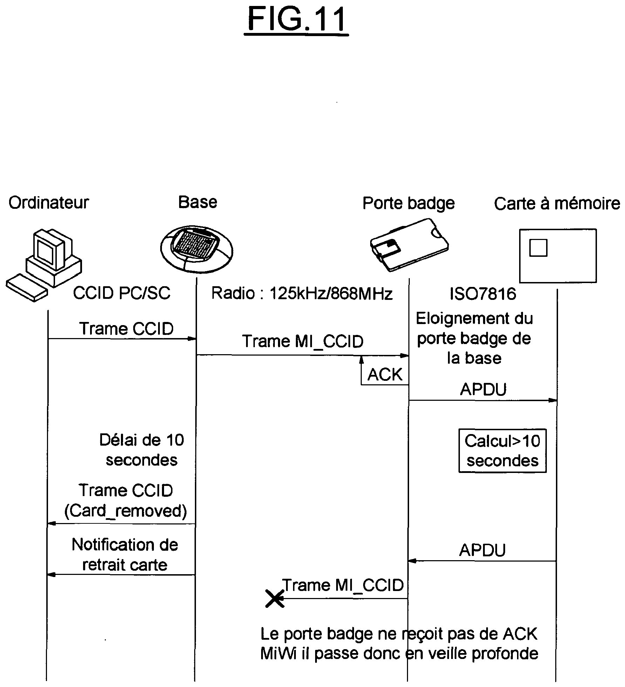

De ce fait, lors de sa réponse à la base, le porte-badge ne recevra pas d'acquittement conforme au protocole MiWi et repassera donc en veille profonde (figure 11).

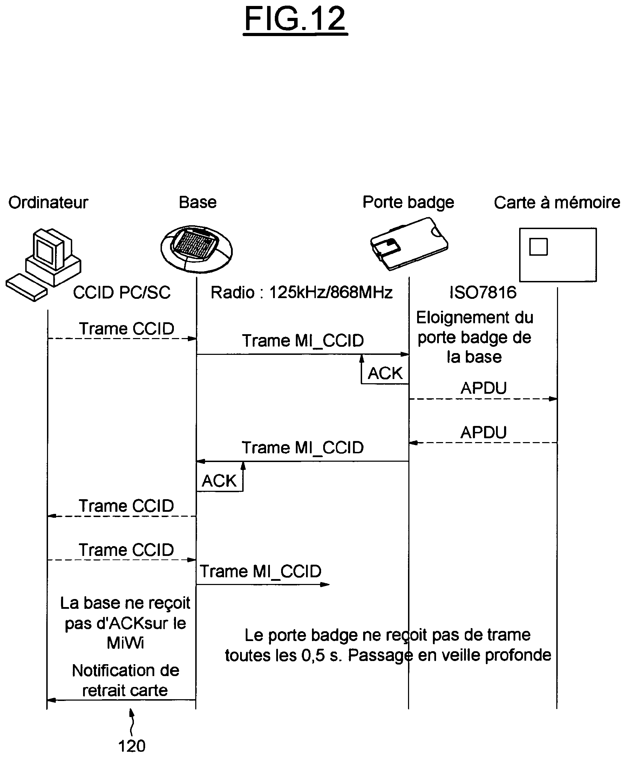

Lorsqu'un porte-base ne reçoit pas de trame Mi_CCID au moins toutes les demi secondes par exemple, les moyens de traitement 110 du porte-badge prennent l'initiative de passer en veille profonde. Lorsque les moyens de contrôle de la base ne reçoivent plus d'acquittement ACT conforme au protocole MiWi après l'envoi d'une trame, ils considèrent que le porte-badge n'est plus dans le champ et notifient le poste de travail de la commande « notification de retrait de carte » (étape 120, figure 12).

Il s'agit donc là d'une déconnexion par perte de connexion radio du fait de la non réception d'une trame par le porte-badge alors que la figure 11 illustrait le cas d'une déconnexion par perte de connexion radio dans le cas d'une trame non reçue par la base.

Il convient également de noter que si une carte à puce 3 est directement insérée dans la base via le connecteur 515, les trames CCID sont traitées dans la base et le dialogue carte est alors réalisé avec la carte à puce insérée et les trames CCID ne sont pas transférées au porte-badge par radio. La base devient alors un lecteur « transparent ». Et sur une base, l'insertion d'une carte dans le connecteur 515 interdit l'appairage avec le premier périphérique (porte-badge) via le premier canal de communication, coupe la liaison radio éventuellement en cours sur le canal de communication bidirectionnelle avec un porte-badge, notifie à l'ordinateur une notification de retrait carte pour initier, par exemple, la désactivation de la session ouverte et en cours avec la carte insérée dans le porte-badge, et notifie ensuite à l'ordinateur une notification d'insertion de carte dans la base pour, par exemple, ré-initier une session avec cette dernière carte à puce.

## Revendications

1. Système d'appairage dynamique entre un premier périphérique (1) pouvant dialoguer avec une carte à mémoire (3) et un second périphérique (2) connecté à un ordinateur (4), ledit premier périphérique (1), ledit second périphérique (2) et ladite carte à mémoire (3) étant compris dans ledit système d'appairage dynamique, ledit système étant **caractérisé en ce que** ledit premier périphérique (1) comprend des moyens aptes à lire les données contenues dans ladite carte à mémoire, des moyens aptes à réceptionner via un premier canal de communication (C_BF) une première information (ID_ BASE) émise par ledit second périphérique et des moyens aptes à émettre via un second canal de communication (C_HF) une seconde information (ID_PB), et ledit second périphérique (2) comprend des moyens aptes à émettre via ledit premier canal de communication (C_BF) ladite première information (ID_ BASE) et des moyens aptes à recevoir via ledit second canal de communication (C_HF) ladite seconde information (ID_PB), la valeur de cette seconde information (ID_PB) conditionnant l'autorisation d'ouverture d'un canal (C_B) de communication bidirectionnel entre ledit premier et ledit second périphérique, et **en ce que** la carte à mémoire contient des informations d'ouverture de session sur ledit ordinateur, et le premier périphérique comprend des moyens aptes à transmettre lesdites informations d'ouverture de session sur le canal de communication bidirectionnel et le second périphérique comprend des moyens aptes à recevoir lesdites informations d'ouverture de session et à les transmettre audit ordinateur.

2. Système selon la revendication 1, dans lequel ledit premier canal de communication (C_BF) est réalisé sous la forme d'un couplage capacitif via un corps humain entre ledit second périphérique et ledit premier périphérique.

3. Système selon la revendication 1 ou 2, dans lequel les moyens du premier périphérique aptes à réceptionner via le premier canal de communication (C_BF) ladite première information (ID_ BASE) comprennent un premier module apte à recevoir ladite première information par couplage capacitif avec un corps humain et les moyens du second périphérique aptes à émettre via ledit premier canal de communication (C_BF) ladite première information (ID_ BASE) comprennent un premier module apte à émettre ladite première information par couplage capacitif via ledit corps humain.

4. Système selon la revendication 3, dans lequel le premier module du deuxième périphérique comprend des moyens de détection de la proximité du corps humain, un émetteur et une antenne apte à transmettre ladite première information sur la fréquence du premier canal de communication, et le premier module du deuxième périphérique comprend une antenne et un récepteur.

5. Système selon la revendication 4, dans lequel les moyens de détection comportent une zone tactile capacitive.

6. Système selon la revendication 1, dans lequel le premier périphérique (1) est formé par un boîtier, par exemple du type porte badge, le boitier comportant un logement pour recevoir la carte à mémoire (3).

7. Système selon la revendication 1, dans lequel le second périphérique est formé par une base, comportant une zone tactile capacitive.

8. Procédé d'appairage dynamique entre un premier périphérique (1) dialoguant avec une carte à mémoire (3) et un second périphérique (2) connecté à un ordinateur (4), **caractérisé en ce que** ledit premier périphérique (1) réceptionne via un premier canal de communication (C_BF) une première information (ID_ BASE) émise par ledit second périphérique et émet via un second canal de communication (C_HF) une seconde information (ID_PB) que reçoit ledit second périphérique (2), la valeur de cette seconde information (ID_PB) conditionnant l'autorisation d'ouverture d'un canal (C_B) de communication bidirectionnel entre ledit premier et ledit second périphérique, et **en ce que** la carte à mémoire contient des informations d'ouverture de session sur ledit ordinateur, et le premier périphérique transmet lesdites informations d'ouverture de session sur le canal de communication bidirectionnel et le second périphérique les transmet audit ordinateur.

9. Procédé selon la revendication 8, dans lequel ledit premier canal de communication (C_BF) est réalisé sous la forme d'un couplage capacitif via un corps humain entre ledit second périphérique et ledit premier périphérique.

10. Procédé selon l'une des revendications 8 ou 9, dans lequel le second canal de communication est un canal radiofréquence.

11. Procédé selon l'une des revendications 8 à 10, dans lequel le canal de communication bidirectionnel est le second canal de communication.

## Patentansprüche

1. Dynamisches Paarungssystem zwischen einem ersten Endgerät (1), das mit einer Speicherkarte (3) kommunizieren kann, und einem zweiten Endgerät (2), das mit einem Computer (4) verbunden ist, wobei das erste Endgerät (1), das zweite Endgerät (2) und die Speicherkarte (3) in dem dynamischen Paarungssystem enthalten sind, wobei das System **dadurch gekennzeichnet ist, dass** das erste Endgerät (1) Mittel, die geeignet sind, die Daten von der Speicherkarte zu lesen, Mittel, die geeignet sind, über einen ersten Kommunikationskanal (C BF) eine erste Information (ID BASE) zu empfangen, die von dem zweiten Endgerät gesendet wird, und Mittel umfasst, die geeignet sind, über einen zweiten Kommunikationskanal (C HF) eine zweite Information (ID PB) zu senden, und das zweite Endgerät (2) Mittel, die geeignet sind, über den ersten Kommunikationskanal (C_BF) die erste Information (ID BASE) zu senden, und Mittel umfasst, die geeignet sind, über den zweiten Kommunikationskanal (C_HF) die zweite Information (ID PB) zu empfangen, wobei der Wert dieser zweiten Information (ID PB) die Genehmigung zum Öffnen eines bidirektionalen Kommunikationskanals (C B) zwischen dem ersten und dem zweiten Endgerät bedingt, und dass die Speicherkarte Informationen zum Eröffnen der Sitzung auf dem Computer enthält und das erste Endgerät Mittel umfasst, die geeignet sind, die Informationen zum Eröffnen der Sitzung über den bidirektionalen Kommunikationskanal zu übertragen, und das zweite Endgerät Mittel umfasst, die geeignet sind, diese Informationen zum Eröffnen der Sitzung zu empfangen und an den Computer zu übertragen.

2. System nach Anspruch 1, in dem der erste Kommunikationskanal (C_BF) in Form einer kapazitiven Kopplung über eine menschliche Gestalt zwischen dem zweiten Endgerät und dem ersten Endgerät ausgeführt wird.

3. System nach Anspruch 1 oder 2, in dem die Mittel des ersten Endgerätes, die geeignet sind, über den ersten Kommunikationskanal (C BF) die erste Information (ID BASE) zu empfangen, ein erstes Modul umfassen, das geeignet ist, die erste Information über kapazitive Kopplung mit einer menschlichen Gestalt zu empfangen, und die Mittel des zweiten Endgerätes, die geeignet sind, über den ersten Kommunikationskanal (C_BF) die erste Information (ID BASE) zu übertragen, ein erstes Modul umfassen, das geeignet ist, die erste Information durch kapazitive Kopplung über die menschliche Gestalt zu senden.

4. System nach Anspruch 3, in dem das erste Modul des zweiten Endgeräts Mittel zur Erkennung der Nähe der menschlichen Gestalt, einen Sender und eine Antenne umfasst, die geeignet ist, die erste Information über die Frequenz des ersten Kommunikationskanals zu übertragen, und das erste Modul des zweiten Endgeräts eine Antenne und einen Empfänger umfasst.

5. System nach Anspruch 4, in dem die Erkennungsmittel einen kapazitiven Touch-Bereich umfassen.

6. System nach Anspruch 1, in dem das erste Endgerät (1) aus einem Gehäuse, beispielsweise vom Typ Kartenhalter, besteht, wobei dieses Gehäuse einen Steckplatz für die Speicherkarte (3) umfasst.

7. System nach Anspruch 1, in dem das zweite Endgerät aus einer Basis besteht, die einen kapazitiven Touch-Bereich umfasst.

8. Dynamisches Paarungsverfahren zwischen einem ersten Endgerät (1), das mit einer Speicherkarte (3) und einem zweiten Endgerät (2) kommuniziert, das mit einem Computer (4) verbunden ist, **dadurch gekennzeichnet, dass** das erste Endgerät (1) über einen ersten Kommunikationskanal (C_BF) eine erste Information (ID BASE) empfängt, die von dem zweiten Endgerät gesendet wird, und über einen zweiten Kommunikationskanal (C HF) eine zweite Information (ID PB) sendet, die das zweite Endgerät (2) empfängt, wobei der Wert dieser zweiten Information (ID PB) die Genehmigung zum Öffnen eines bidirektionalen Kommunikationskanals (C B) zwischen dem ersten und dem zweiten Endgerät bedingt, und dass die Speicherkarte Informationen zum Eröffnen der Sitzung an dem Computer enthält, und das erste Endgerät die Informationen zum Eröffnen der Sitzung über den bidirektionalen Kommunikationskanal überträgt und das zweite Endgerät sie an den Computer überträgt.

9. Verfahren nach Anspruch 8, bei dem der erste Kommunikationskanal (C BF) in Form einer kapazitiven Kopplung über eine menschliche Gestalt zwischen dem zweiten Endgerät und dem ersten Endgerät ausgeführt ist.

10. Verfahren nach einem der Ansprüche 8 oder 9, bei dem der zweite Kommunikationskanal ein RF-Kanal ist.

11. Verfahren nach einem der Ansprüche 8 bis 10, bei dem der bidirektionale Kommunikationskanal der zweite Kommunikationskanal ist.

## Claims

1. System for dynamic pairing between a first peripheral (1) capable of dialoguing with a memory card (3) and a second peripheral (2) connected to a computer (4), said first peripheral (1), said second peripheral (2) and said memory card (3) being comprised in said system for dynamic pairing, said system being **characterized in that** said first peripheral (1) comprises means capable of reading the data contained in said memory card, means capable of receiving, via a first communications channel (C_BF), a first piece of information (ID_BASE) sent by said second peripheral and means capable of sending a second piece of information (ID_PB) via a second communications channel (C_HF), and said second peripheral (2) comprises means capable of sending said first piece of information (ID_BASE) via said first communications channel (C_BF) and means capable of receiving said second piece of information (ID_PB) via said second communications channel (C_HF), the value of this second piece of information (ID_PB) being a condition for authorization to open a two-way communications channel (C_B) between said first peripheral and said second peripheral, and **in that** the memory card contains pieces of information for opening a session on said computer and the first peripheral comprises means capable of transmitting said pieces of information for opening a session on the two-way communications channel and the second peripheral comprises means capable of receiving said pieces of information for opening a session and transmitting them to said computer.

2. System according to claim 1, wherein said first communications channel (C_BF) is made in the form of a capacitive coupling via a human body between said second peripheral and said first peripheral.

3. System according to claim 1 or 2, wherein the means of the first peripheral capable of receiving said first piece of information (ID_BASE) via the first communications channel (C_BF) include a first module capable of receiving said first piece of information by capacitive coupling with a human body and the means of the second peripheral capable of sending said first piece of information (ID_BASE) via said first communications channel (C_BF) comprise a first module capable of sending said first piece of information by capacitive coupling via said human body.

4. System according to claim 3, wherein the first module of the second peripheral comprises means for detecting the proximity of the human body, a sender and an antenna capable of transmitting said first piece of information on the frequency of the first communications channel and the first module of the second peripheral comprising an antenna and a receiver.

5. System according to claim 4, wherein the means for detecting comprise a capacitive touch-sensitive zone.

6. System according to claim 1, wherein the first peripheral is a case, for example of the badge-holder type, capable of receiving said memory card.

7. System according to claim 1, wherein the second peripheral is a base, comprising a capacitive touch-sensitive zone.

8. Method of dynamic pairing between a first peripheral (1) dialoguing with a memory card (3) and a second peripheral (2) connected to a computer (4), **characterized in that** said first peripheral (1) receives, via a first communications channel (C_BF), a first piece of information (ID _BASE) sent by said second peripheral and sends a second piece of information (ID_PB), via a second communications channel (C_HF), that said second peripheral (2) receives, the value of this second piece of information (ID_PB) being a condition of authorization to open a two-way communications channel between said first and said second peripherals, and **in that** the memory card contains pieces of information for opening a session on said computer and the first peripheral comprises means capable of transmitting said pieces of information for opening a session on the two-way communications channel and the second peripheral comprises means capable of receiving said pieces of information for opening a session and transmitting them to said computer.

9. Method according to claim 8, wherein said first communications channel (C_BF) is made in the form of a capacitive coupling via a human body between said second peripheral and said first peripheral.

10. Method according to one of the claims 8 or 9, wherein the second communications channel is a radiofrequency channel.

11. Method according to one of the claims 8 to 10, wherein the two-way communications channel is the second communications channel.
